(19) **Europäisches Patentamt**

**European Patent Office**

**Office européen des brevets**

(11) **EP 1 114 718 A1**

(12) **EUROPEAN PATENT APPLICATION**
published in accordance with Art. 158(3) EPC

(43) Date of publication:
**11.07.2001 Bulletin 2001/28**

(51) Int Cl.[7]: **B32B 5/28**, B29B 11/16,
C08J 5/24

(21) Application number: **00919157.8**

(22) Date of filing: **24.04.2000**

(86) International application number:
**PCT/JP00/02652**

(87) International publication number:
**WO 00/64668 (02.11.2000 Gazette 2000/44)**

(84) Designated Contracting States:
**DE ES FR GB IT**

(30) Priority: **23.04.1999 JP 11627099**

(71) Applicant: **Sakase Adtech Co., Ltd.
Fukui 910-0363 (JP)**

(72) Inventors:
- **KUBOMURA, Kenji
  Kanazawa-shi, Ishikawa 921-8163 (JP)**
- **WATANABE, Akihito, Sakase Adtech Co., Ltd.
  Fukui 910-0363 (JP)**

(74) Representative: **VOSSIUS & PARTNER
Siebertstrasse 4
81675 München (DE)**

(54) **FIBER-REINFORCED RESIN COMPOSITE MATERIAL HAVING REDUCED COEFFICIENT OF LINEAR EXPANSION**

(57) A fiber-reinforced resin composite material which comprises an in-plane pseudoisotropic plate formed by providing two or more types of reinforcing fibers at least one of which has a negative coefficient of linear expansion, preparing a prepreg sheet comprising a combination of such fibers and laminating such sheets, and is adjusted to have a reduced coefficient of linear expansion, in particular, to have the coefficient of zero. The coefficient of linear expansion of the composite material is adjusted to be as small as possible in the course of manufacture of the material using various means, that is, by yarn doubling or comingling of a combination of two or more types of reinforcing fibers, by combining various prepreg sheets formed from the resultant fiber bundles, by preparing a fiber bundle having a predetermined coefficient by yarn doubling or the like, by changing the three-dimensional structure of doubled fibers, woven fabric or the like, or by a combination of the above.

Fig. 1

**Description**

Field of the Invention

The present invention relates to fiber reinforced resin material having a reduced coefficient of linear expansion, particular relates to fiber reinforced resin material having a coefficient of linear expansion of substantially zero.

Background of the Invention

In a conventional art, fiber reinforced resin composite material having a reduced coefficient of linear expansion can accomplish physical and chemical characteristics suitable for its purpose by selecting a combination of reinforced fiber and resin matrix, and has been broadly used. Particularly, fiber reinforced resin composite material is strong with respect to chemical reaction and corrosion environment, and has a low specific gravity and high stiffness in general. The material has been broadly utilized as structures and parts in the field of an aircraft and space environment, applicable to parts of fine machinery devices, material of construction or sporting goods.

In the case of utilizing material as structural parts for fine tools used in an environment thermally influenced, it would become a serious problem caused by thermal expansion in accordance with a temperature varying. For example, in the case of an artificial satellite, a temperature at a side confronting with sun and a temperature at a side opposite to sun are remarkably different so that installed fine tools are baneful influenced by thermal expansion in such an environment. In a field of a semiconductor manufacturing device, an optical tool and a fine processing device, baneful influence caused by thermal expansion should be reduced as less as possible.

In a conventional art, although material having reduced coefficient of thermal expansion such as Inver alloy, quartz glass, carbon fiber reinforced resin composite material has been used, these are metal, silica system material or limited material. In the case of the material, its utility, strength, specific gravity and manufacturing cost would be restricted. It is required a coefficient of liner expansion as less as possible so as to utilize a fiber reinforced resin composite material in the various field described above. In order to control a coefficient of linear expansion of fiber reinforced resin composite material, it is prefer to use reinforced fiber and matrix resin of which a coefficient of linear expansion is low or substantially zero. However, it is not an actual way to provide the characteristic described above with respect to the both of the reinforced fiber and the resin matrix. There has been an experiment to reduce a total coefficient of linearly expansion by combining fiber having a negative coefficient of linear expansion along a fiber direction and fiber having a positive coefficient of linear expansion along the fiber direction so as to cancel these coefficients each other.

However, in the method, it would be difficult for the both of reinforced fiber and resin matrix to provide suitable characteristics. Upon considering strength and heat-resistant of the fiber reinforced resin composite material originally required, a material selection is so restricted.

A factor for determining a coefficient of linear expansion of a plate member and a furnished product made of reinforced fiber resin composite material is not only a coefficient of linear expansion of these materials but also a blending ratio of the reinforced fiber and the matrix resin. Depending on a kind of reinforced fiber, such as monofilament, yarn doubling and yarn twisting, a structure of prepreg and a laminating condition such as a three dimensional laminating structure formed by biaxial/triaxial textile with one-way prepreg aligned along one direction and a structure of filaments and their laminated structure.

The present inventors reviewed a combination of reinforced fibers and their kinds, a selected structure of the reinforced fiber and a prepreg so as to provide reinforced fiber resin composite material having superior characteristics wherein the inventors found factors how a coefficient of linear expansion can be effectively and finely reduced.

Disclosure of the Invention

Regarding an in-plane quasi-isotropic material formed by reinforced fiber resin composite material according to the present invention, two kinds or more than reinforced fibers are combined, wherein at least one reinforced fiber having a negative coefficient of linear expansion is included. A respective sheet woven by one kind or more than reinforced fibers of which each coefficient of linear expansion is controlled is combined so as to reduce a total coefficient of linear expansion, wherein two kinds or more than reinforced fibers are formed as a strand in a condition of monofilament, yarn doubling or twisting yarn.

Under the above structure, a plurality of sheets formed by one kind or more than reinforced fiber in which a three dimensional structure of twisting yarn, biaxial textile or triaxial textile controls its coefficient of linear expansion are combined so as to provide an in-plane quasi-isotropic material by providing reinforced fiber resin composite material wherein the coefficient of linear expansion is reduced.

Further, two or more than sheets made of reinforced fiber are combined wherein a coefficient of linear expansion of the respective reinforced fiber is different each other and at least one reinforced fiber has a negative coefficient of linear expansion so as to provide an in-plane quasi-isotropic material by providing reinforced fiber resin composite material wherein the coefficient of linear expansion is reduced. These kinds of reinforced fibers can be selected from various selections. Even if a reinforced fiber had an excellent elastic modulus and excellent chemical characteristics, the reinforced fiber could not have been utilized since the reinforced fiber has a negative coefficient of linear expansion. Unless a reinforced fiber had a proper coefficient of linear expansion, the reinforced fiber could not have been utilized. Nowadays, these reinforced fibers can be utilized in the present invention.

By combining these reinforced fibers in a form of one prepreg or a plurality of prepreg, a total coefficient of linear expansion is controlled to a predetermined level. After forming reinforced fiber resin composite material with these reinforced fibers, a final coefficient of the material would be within a preferable range, for example, substantially zero. Regarding the combined reinforced fibers, the respective coefficient of linear expansion of monofilament is not so important. The coefficient of linear expansion of the reinforced fiber with respect to a resin matrix and the coefficient of the resin matrix are finally controlled so that a reduced coefficient of linear expansion can be provided. Upon considering a structure of reinforced fiber formed by monofilament, a coefficient of linear expansion of the combined reinforced fibers is controlled by selecting kinds and number of reinforced fibers and its blending ratio.

Embodiments of these reinforced fibers may be yarn doubling of which the total coefficient of linear expansion is controlled or a strand formed by two kinds or more than reinforced fibers are bundled.

In the present invention as claimed in claim 3, a coefficient of linear expansion is controlled by utilizing a fact that the coefficient is varied by a three dimensional structure of reinforced fiber. A three dimensional structure is formed by twisting yarn in which reinforced fibers are twisted so that a substantial length becomes longer and a twisting condition is changed caused by expansion/contraction of the twisting yarn. As the result, an apparent coefficient of linear expansion is changed. Thus, a substantial coefficient of linear expansion can be varied by utilizing such a twisting yarn. By preparing a prepreg formed by reinforced fibers made of the twisting yarn, a coefficient of linear expansion of a fiber reinforced structure can be controlled by utilizing the same kind of reinforced fiber. As similarly, by preparing one-way prepreg, prepreg formed by biaxial textile or prepreg formed by triaxial textile, the substantial length of the fiber is different depending on their three dimensional textile structures. Apparent coefficient of linear expansion is varied caused by expansion/contraction of the prepreg. Upon considering the difference of the coefficients of linear expansion caused by the structures of the prepregs, the total coefficient of linear expansion of fiber reinforced resin composite material can be reduced to a predetermined level.

In the present invention as claimed in claim 4, a coefficient of linear expansion of a laminated reinforced structure is controlled by combining sheets with different coefficients of linear expansion made of reinforced fibers having different coefficients of linear expansion. Regarding these sheets having different linear expansion ratio, a sheet aligned along one direction and a sheet formed by biaxial/triaxial textile may be utilized. A coefficient of linear expansion is controlled by laminating a predetermined number of pairs including two or more than sheets having different coefficients of linear expansion so as to reduce a coefficient of linear expansion of fiber reinforced resin composite material to a predetermined level as an in-plane quasi-isotropic material.

As described above, by combining reinforced fibers having different coefficient of linear expansion, or considering a three dimensional structure of sheets, the coefficient of linear expansion is controlled by laminating sheets formed by reinforced fibers having a different coefficient of linear expansion so that a coefficient of linear expansion of reinforced fiber resin composite material can be controlled to a predetermined level. In addition, by combining these structures, a total coefficient of liner expansion can be controlled more effectively and easily.

Brief Description of the Drawings

Fig. 1 is a schematic view for explaining a control of a coefficient of linear expansion of fiber reinforced resin composite material.

Fig. 2 shows a structure bundled by reinforced fibers A and B, wherein each coefficient of linear expansion is different.

Fig. 3 shows an example of a prepreg sheet formed by bundled fibers of which the respective coefficient of linear expansion is different each other. Fig. 3(a) shows a one-way prepreg sheet, Fig. 3(b) shows a biaxial prepreg sheet and Fig. 3(c) shows a triaxial prepreg sheet.

Fig. 4 shows an example of fiber bundle having a constant coefficient of linear expansion formed by reinforced fibers having different coefficient of linear expansion. Fig. 4(a) is an example of the one-way direction prepreg; Fig. 4 (b) is an example of the biaxial prepreg sheet; and Fig. 4(c) is an example of the triaxial prepreg sheet.

The Preferred Embodiment of the Present Invention

With reference to the accompanying drawings, it will be explained a concrete structure of fiber reinforced resin composite material according to the present invention and its embodiments.

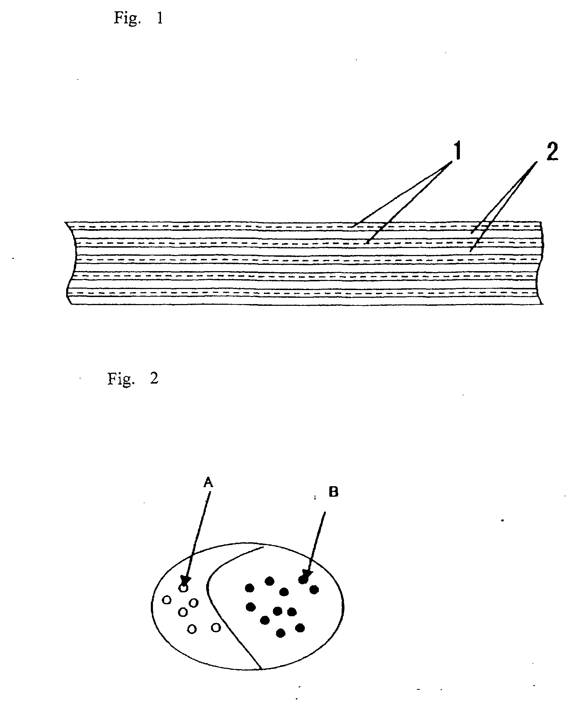

Fig. 1 shows a principle how a coefficient of linear expansion of an in-plane quasi-isotropic plate according to the present invention is controlled to a predetermined level by combining a sheet 1 and a sheet 2 having different coefficient of linear expansion each other. In Fig. 1, one reinforced fiber has a negative coefficient of linear expansion. Regarding the other reinforced fiber, its coefficient may be relatively large (positive) . By alternatively laminating the sheet 1 and the sheet 2 as shown in Fig. 1 in order to provide an in-plate quasi-isotropic plate and thermally hardening the plate, a coefficient of linear expansion formed as fiber reinforced resin composite material can be controlled to zero or a predetermined level.

Under the structure described above, a coefficient of linear expansion of each reinforced fiber and a coefficient of linear expansion of matrix resin can be selected easily. Under the combination, fiber having a high elastic coefficient and reinforced fiber having excellent chemical characteristics may be blended with reinforced fiber of which material is suitable for controlling a coefficient of linear expansion so as to provide new material having the most preferable characteristics.

Fig. 2 shows a bundle of reinforced fibers formed by at least two kinds of fibers, a reinforced fiber A with one coefficient of linear expansion and a reinforced fiber B with a different coefficient of linear expansion. By blending these two kinds of reinforced fibers, a strand of which a coefficient of linear expansion is controlled to a predetermined value can be obtained.

By bundling reinforced fibers, bundled fibers can be treated as one material having a constant coefficient of linear expansion so that composite material can be formed by a one-way prepreg by aligning these bundles along one direction, a biaxial textile prepreg or a triaxial textile prepreg. Accordingly, by laminating a predetermined number of prepreg formed by fiber bundles having a constant coefficient of linear expansion, a coefficient of linear expansion of an in-plate quasi-isotropic plate can be controlled.

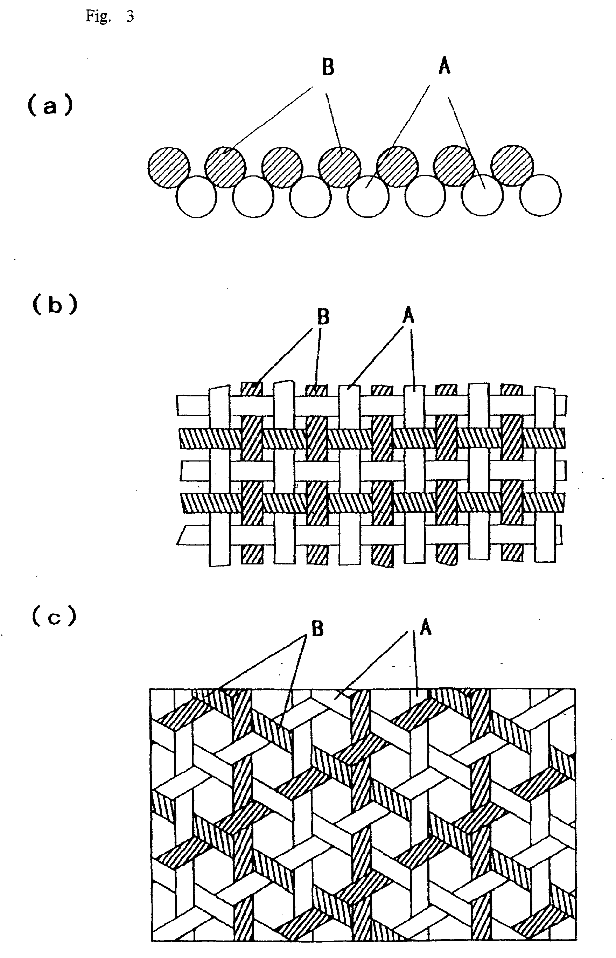

Fig. 3(a) shows a one-way prepreg wherein fiber bundles A and B formed by reinforced fibers having different coefficient of linear expansion are aligned along one direction, Fig. 3(b) shows a biaxial textile prepreg and Fig. 3(c) shows a triaxial textile prepreg. The coefficient of linear expansion can be controlled to the predetermined level by alternatively aligning fiber bundles A and B having different coefficient of linear expansion each other. A product process of the material is as similar as that of normal reinforced fiber resin composite material.

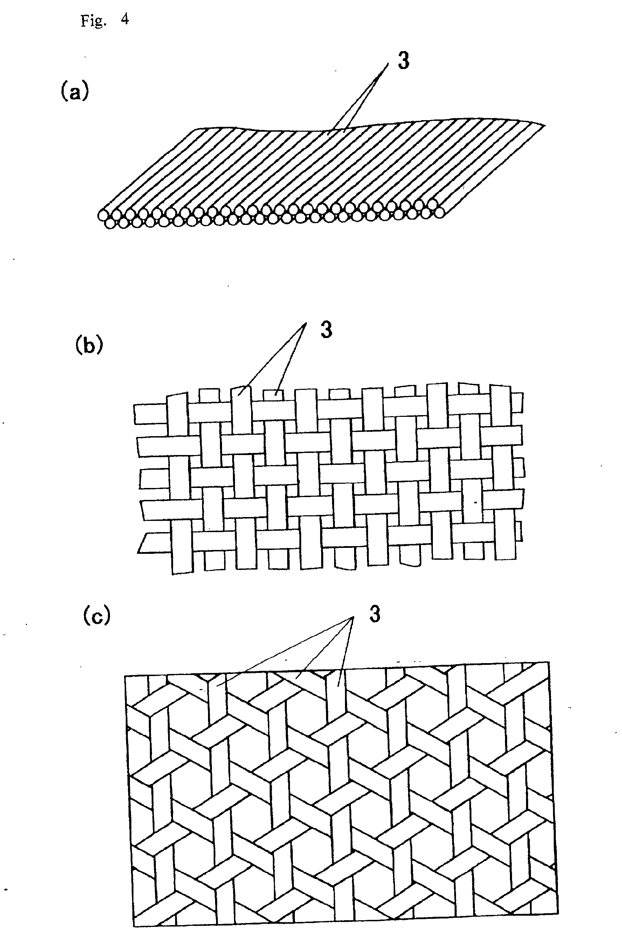

Fig. 4(a) through 4(c) shows examples of fiber bundles 3 having a predetermined value of linear expansion by blending reinforced fibers having different coefficient of linear expansion as shown in Fig. 2, respectively. In these examples, the fiber bundles have the same coefficient of linear expansion so that the fiber bundles can be treated as similar as normal fiber bundles. In an example as shown in Fig. 4(a), a diameter of a monofilament is 4 to 50 $\mu$ m and number of fibers are 10 to 1000, 000. By aligning these fibers as shown in Fig. 4 (a), one-way prepreg having a thickness of 10 to 500 $\mu$ m and a width of 1 to 150cm can be provided.

Fig. 4(b) and 4(c) is examples of biaxial textile and triaxial textile, respectively.

Regarding a combination of reinforced fibers according to the present invention, actual cases of the combination of reinforced fiber and resin matrix are shown as follows:

(1) Characteristics of epoxy system resin used for a matrix

| | |
|---|---|
| Tensile elastic modulus: | 360kg/mm$^2$ |
| Poisson ratio | 0.35 |
| Thermal expansion ratio | 60ppm/$^\circ$C |

(2) Characteristics of Reinforced fiber: fiber type, coefficient of linear expansion and tensile elastic modulus of reinforced fiber are shown in Table 1

Table 1:

| fiber type, coefficient of linear expansion and tensile elastic modulus of reinforced fiber | | |
|---|---|---|
| Fiber type Fiber type | Tensile elastic modulus along a fiber direction kgf/mm$^2$ | Coefficient of linear expansion along a fiber direction x10$^{-6}$/$^\circ$C |
| PAN-based carbon fiber (M50J) | 48,500 | -1 |
| PAN-based carbon fiber (M50J) | 60,000 | -1.1 |
| PAN-based carbon fiber (M50J) | 23,500 | -0.41 |
| PAN-based carbon fiber (M50J) | 35,000 | -0.73 |
| Pitch-based carbon fiber (YS-35) | 35,690 | -1.1 |

Table 1: (continued)

| fiber type, coefficient of linear expansion and tensile elastic modulus of reinforced fiber | | |
|---|---|---|
| Fiber type Fiber type | Tensile elastic modulus along a fiber direction kgf/mm$^2$ | Coefficient of linear expansion along a fiber direction x10$^{-6}$/°C |
| Pitch-based carbon fiber (YS-60) | 61,183 | -1.5 |
| Pitch-based carbon fiber (YS-70) | 71,972 | -1.5 |
| Aramid fiber (K149) | 19,000 | -2 |
| PBO fiber (zairon) | 28,500 | -6 |
| PBO: Polyparaphenylene Benzo Oxazale<br>Zairon: trademark registered by TOYO BOSEKI Co.,Ltd. | | |

A sheet is formed by arranging these reinforced fibers along one direction and immersed in matrix resin as one-way directional material. In the case of an in-plane quasi-isotropic plate formed by laminating these sheets, a coefficient of linear expansion of the plate is calculated by the following equation (the equation and its explanation were disclosed by one of inventors at a seminar of Composite Material at Hokuriku division on April 14, 1999).

These reinforced fibers are formed as one-way sheet, biaxial textile or triaxial textile. An in-plane quasi-isotropic material is formed by laminating these sheets and hardened so as to form composite material. The coefficient of linear expansion of the respective fiber and sheet in the composite material can be judged in a macro view. Even if the structure of the composite material is different, the total coefficient can be treated usually.

A blend ratio in the case of bundled fibers as shown in Fig. 2 formed by blending two kinds of fibers having different coefficient of linear expansion is recognized as a hybrid ratio. A ratio of combining a yarn prepreg, a one-way prepreg, a biaxial prepreg, a triaxial prepreg and a four-axial prepreg formed by bundled fibers of two kinds of fibers having the different coefficient of linear expansion can be treated as a hybrid ratio.

$$\alpha = (E_L * \alpha_L + E_L * \alpha_T + \mu_{LT} * E_L * \alpha_L + \mu_{LT} * E_L * (\alpha_L + \alpha_T)) / (E_L + E_T + 2\mu_{LT} * E_L)$$

In the equation,

$E_L$: elastic modulus of one-way material along a fiber direction
$E_T$: elastic modulus of one-way material along a direction perpendicular to the fiber direction
$\mu_{LT}$ : Poisson ratio
$\alpha_L$ : coefficient of linear expansion of one-way material along
a fiber direction
$\alpha_T$ : coefficient of linear expansion of one-way material along a direction perpendicular to the fiber direction

Material characteristics of these one-way materials are determined by kind of fiber and resin and a content ratio of fiber. Regarding characteristics of reinforced fiber, an elastic modulus of one-way material along a transversal direction or a crimp ratio of textile are influenced. However, there is not sufficient data about them. Therefore, regarding the influence caused by these factors are estimated based on an experimental knowledge and checked actually.

(3) An in-plane quasi-isotropic plate is formed by laminating sheets made of one-way prepreg and prepreg formed by biaxial textile in accordance with the following method.

(a) A prepreg is formed by a pair of one-way prepreg formed by a layer 1 and a layer 2 as shown in Fig. 1. These pairs are laminated along directions of 0° , 90° , 45° , - 45° , -45°, 45° , 90° , 0° in order so as to form an in-plane quasi-isotropic plate.
(b) Eight sheets of one-way prepregs having the same characteristics as shown in Fig. 4(a) formed by fibers as shown in Fig. 2 are laminated along direction of 0° , 90° , 45° , -45° , -45° , 45° , 90° , 0° in order so as to form an in-plane quasi-isotropic plate.
(c) In the case of biaxial textile, if a crimp ratio is controlled to reduce, the textile is not so different from the one-way material and substantially utilized as same as the one-way prepreg. The similar plate can be produced by laminating sheets of the biaxial textile along a direction of 0° , 45° , 45° , 0° . These four prepregs are same material formed by yarn doubling of two kinds or more than fibers, combing wool or a textile alternatively woven by these fiber bundles . Such a structure is shown in Fig. 2, Fig. 3(b) and Fig. 4(b).

(d) Regarding an in-plane quasi-isotropic plate formed by the above described method, relation between a hybrid ratio calculated by the above equation and a coefficient of thermal expansion is shown in Table 2.

Table 2:

| Hybrid ratio of fiber and coefficient of thermal expansion of an in-plane quasi-isotropic plate | | | | | | | |
|---|---|---|---|---|---|---|---|
| Fiber type | | Hybrid ratio (%) = weight of fiber A/(weight of fiber A + weight of fiber B) x 100 | | | | | |
| Fiber A | Fiber B | 0% | 20% | 40% | 60% | 80% | 100% |
| M50J | M60J | -0.21 | -0.14 | -0.06 | 0.02 | 0.11 | 0.21 |
| YS-35 | YS-60 | -0.39 | -0.24 | -0.07 | 0.18 | 0.41 | 0.74 |
| K149 | YS-70 | -0.55 | -0.36 | -0.11 | 0.28 | 0.93 | 2.24 |
| (Note)<br>Lamination direction: 0° , 90° , +45° , -45° , -45° , +45° , 90° , 0° | | | | | | | |

Vf= 60%

As shown in Table 2, it would be found a minimum coefficient of thermal expansion depending on the hybrid ratio. Hybrid ratios of reinforced fibers of which a total coefficient of thermal expansion is zero are shown in Table 3.

Table 3:

| Weight ratio of Fibers A and B, and elastic modulus in the case that an in-plane coefficient of thermal expansion is zero | | | | |
|---|---|---|---|---|
| Fiber type | | Weight of fiber (%) | | |
| Fiber A | Fiber B | Fiber A | Fiber B | Elastic modulus (kg/mm$^2$) |
| M50J | M60J | 55.1 | 44.9 | 11,328 |
| YS-35 | YS-60 | 44.6 | 55.4 | 10,619 |
| K149 | YS-70 | 45.4 | 53.6 | 10,099 |
| (Note) Vf=60% | | | | |

(4) In the case of a triaxial textile, an in-plane quasi-isotropic characteristic can be obtained by one textile sheet. In such a case, a crimp ratio is varied depending on its thickness. Therefore, it has been checked ratios of textile having thickness of 0.1mmm and 0.2mm.

(a) A relation between a hybrid ratio and a coefficient of thermal expansion of composite material formed by a triaxial textile having a thickness 0.1mm calculated from the above equation

Table 4:

| Hybrid ratio of fiber and in-plane thermal expansion coefficient (unit:ppm/°C) | | | | | | | |
|---|---|---|---|---|---|---|---|
| Fiber type | | Hybrid ratio (%) = weight of fiber A/(weight of fiber A + weight of fiber B) x 100 | | | | | |
| Fibe r A | Fiber B | 0% | 20% | 40% | 60% | 80% | 100% |
| T300 | Zairon | -2.86 | -1.98 | -1.04 | -0.04 | 1.04 | 2.19 |
| K149 | Zairon | -2.86 | -2.11 | -1.26 | -0.27 | 0.89 | 2.26 |
| -M35J | Zairon | -2.86 | -1.98 | -1.17 | -0.03 | 0.27 | 0.92 |
| (Note) thickness of triaxial textile: 0.1mm<br>Vf = 60% | | | | | | | |

As similarly, the hybrid ratio is shown in Table 5 in the case that a thermal expansion coefficient of the combined fibers as shown in Fig. 4 is zero.

Table 5:

| Weight ratio of fibers A and B, and elastic modulus of which an in-plane thermal expansion coefficient is zero. | | | | |
|---|---|---|---|---|
| Kind of fiber | | Weight of fiber (%) | | Elastic modulus (kg/mm$^2$) |
| Fiber A | Fiber B | Fiber A | Fiber B | |
| T300 | Zairon | 60.7 | 39.3 | 5,729 |
| K149 | Zairon | 65 | 35 | 5,038 |
| M35J | Zairon | 72.1 | 27.9 | 7,221 |
| (Note) Thickness of triaxial textile: 0.1mm Vf=60% | | | | |

(b) Table 6 shows a relation between the hybrid ratio and thermal expansion coefficient of composite material made of triaxial textile having a thickness of 0.2mm calculated from the above equation

Table 6:

| Hybrid ratio of fiber and in-plane thermal expansion coefficient of triaxial textile (unit: ppm/°C) | | | | | | | |
|---|---|---|---|---|---|---|---|
| Fiber type | | Hybrid ratio (%) = weight of fiber A/(weight of fiber A + weight of fiber B) x 100 | | | | | |
| Fiber A | Fiber B | 0% | 20% | 40% | 60% | 80% | 100% |
| T300 | Zairon | -2.80 | -1.94 | -1.02 | -0.03 | 1.05 | 2.22 |
| K149 | Zairon | -2.80 | -2.08 | -1.24 | -0.26 | 0.90 | 2.31 |
| M35J | Zairon | -2.80 | -1.95 | -1.16 | -0.42 | 0.28 | 0.95 |
| (Note) a thickness of triaxial textile: 0.2mm, Vf = 60% | | | | | | | |

As similarly, the hybrid ratio is shown in Table 7 in the case that a thermal expansion coefficient of the combined fibers as shown in Fig. 6 is zero

Table 7 :

| Weight ratio of Fibers A and B, and elastic modulus in the case that an in-plane quasi-isotropic thermal expansion coefficient is zero. | | | | |
|---|---|---|---|---|
| Fiber type | | Weight of fiber (%) | | Elastic modulus (kg/mm$^2$) |
| Fiber A | Fiber B | Fiber A | Fiber B | |
| T300 | Zairon | 60.6 | 39.4 | 5,713 |
| K149 | Zairon | 64.8 | 35.2 | 5,028 |
| M35J | Zairon | 71.8 | 28.2 | 7,168 |
| (Note) Thickness of triaxial textile:0.2mm Vf=60% | | | | |

In the above embodiments, epoxy resin is used as a matrix. However, if any resins have proper characteristics, various thermoplastic resin can be used as the matrix. In addition, a matrix of composite material including resin and metal may be used if the matrix has proper characteristics.

Further, it is effective to control coefficient of thermal expansion of these resin. Characteristics of resin such as a coefficient of thermal expansion may be controlled by blending various fillers in the resin.

Although the above embodiments show an isotropic coefficient of linear expansion by providing fiber reinforced resin composite material having an in-plane quasi-isotropic characteristic, a combination of fiber bundles and prepreg disclosed in the above embodiments may be controlled in the case that a coefficient of linear expansion is different depending on its direction.

Industry Field Applicable to the Invention

In fiber reinforced resin composite material according to the present invention, reinforced fiber having various characteristics and different coefficient of linear expansion and matrix resin are combined in the above described embodiments. By controlling a coefficient of linear expansion of reinforced fibers, fiber reinforced resin composite material having a controlled coefficient of linear expansion and preferable characteristics can be obtained. The material can be broadly utilized as a structure and a part used in a fine machinery or an air craft and space environment where varying temperature and thermal expansion caused by varying temperature are remarkably influenced.

**Claims**

1. In-plane quasi-isotropic fiber reinforced resin composite material having a reduced coefficient of linear expansion by combining sheets woven by one kind or more than reinforced fibers, each coefficient of linear expansion of said sheets controlled to be reduced by combining two kinds or more than of reinforced fibers wherein said reinforced fibers includes at least one kind of reinforced fibers having a negative coefficient of linear expansion.

2. In-plane quasi-isotropic fiber reinforced resin composite material having a reduced coefficient of linear expansion as claimed in claim 1, said material characterized in that monofilament, yarn doubling or blending strand is used for said two kinds or more than of reinforced fibers.

3. In-plane quasi-isotropic fiber reinforced resin composite material having a reduced coefficient of linear expansion as claimed in claims 1 or 2, wherein said coefficient of linear expansion is reduced by combining sheets woven by one kind or more than reinforced fibers of which a coefficient of linear - expansion is controlled by a three dimensional structure of twisting yarn, biaxial textile or triaxial textile.

4. In-plane quasi-isotropic fiber reinforced resin composite material having a reduced coefficient of linear expansion by combining sheets with different coefficient of linear expansion woven by one kind or more than reinforced fibers, wherein each coefficient of linear expansion of said reinforced fibers is controlled to be reduced by combining two kinds or more than of reinforced fibers wherein at least one kind of said reinforced fibers has a negative coefficient of linear expansion.

5. In-plane quasi-isotropic fiber reinforced resin composite material having a reduced coefficient of linear expansion selected from material claimed in at least one of claims 1 through 4.

6. Yarn prepreg, one-way prepreg, biaxial textile, triaxial textile, four axial textile or a prepreg formed by these textile used for in-plane quasi-isotropic fiber reinforced resin composite material as claimed in one of claims 1 through 5, wherein a coefficient of linear expansion of said material is controlled.

Fig. 1

Fig. 2

Fig. 3

(a)

B    A

(b)

B    A

(c)

B    A

Fig. 4

(a)

3

(b)

3

(c)

3

**EP 1 114 718 A1**

<table>
<tr><td colspan="2">INTERNATIONAL SEARCH REPORT</td><td colspan="2">International application No.<br>PCT/JP00/02652</td></tr>
</table>

A. CLASSIFICATION OF SUBJECT MATTER
   Int.Cl⁷   B32B5/28, B29B11/16, C08J5/24

According to International Patent Classification (IPC) or to both national classification and IPC

B. FIELDS SEARCHED

Minimum documentation searched (classification system followed by classification symbols)
   Int.Cl⁷   B32B1/00-35/00, B29B11/16, B29B15/08-15/14,
             C08J5/04-5/10, C08J5/24

Documentation searched other than minimum documentation to the extent that such documents are included in the fields searched
   Jitsuyo Shinan Koho          1926-2000
   Kokai Jitsuyo Shinan Koho    1971-1995

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| $Y_1$ | JP, 5-254048, A (Asahi Schwebel Co., Ltd.),<br>05 October, 1993 (05.10.93)   (Family: none) | 1-6 |
| $Y_1$ | JP, 58-193144, A (Hitachi, Ltd.),<br>10 November, 1983 (10.11.83)   (Family: none) | 1-6 |
| $Y_2$ | JP, 4-140127, A (Mitsubishi Heavy Industries, Ltd.),<br>14 May, 1992 (14.05.92)   (Family: none) | 1-6 |
| $Y_2$ | JP, 51-14969, A (Fuji Heavy Industries Ltd.),<br>05 February, 1976 (05.02.76)   (Family: none) | 1-6 |
| $Y_2$ | JP, 50-12174, A (TRW Inc.),<br>07 February, 1975 (07.02.75)   (Family: none) | 1-6 |
| $Y_2$ | US, 5312670, A (Kuang-Ming Wu, Brian L.Avery),<br>17 May, 1994 (17.05.94)   (Family: none) | 1-6 |
| $Y_2$ | US, 5654077, A (Kuang-Ming Wu, Brian L.Avery),<br>05 August, 1997 (05.08.97)   (Family: none) | 1-6 |

☐ Further documents are listed in the continuation of Box C.     ☐ See patent family annex.

| | | |
|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" | document member of the same patent family |

| Date of the actual completion of the international search<br>   17 July, 2000 (17.07.00) | Date of mailing of the international search report<br>   01 August, 2000 (01.08.00) |
|---|---|
| Name and mailing address of the ISA/<br>   Japanese Patent Office | Authorized officer |
| Facsimile No. | Telephone No. |

Form PCT/ISA/210 (second sheet) (July 1992)

12